Europäisches Patentamt

European Patent Office

Office européen des brevets

(11) Veröffentlichungsnummer: **0 581 174 A1**

(12) **EUROPÄISCHE PATENTANMELDUNG**

(21) Anmeldenummer: **93111635.4**

(22) Anmeldetag: **21.07.93**

(51) Int. Cl.5: **C01G 49/02**, C04B 35/26, H01F 1/11

(30) Priorität: **28.07.92 DE 4224883**

(43) Veröffentlichungstag der Anmeldung: **02.02.94 Patentblatt 94/05**

(84) Benannte Vertragsstaaten: **DE ES FR GB NL**

(71) Anmelder: **BASF Magnetics GmbH Dynamostrasse 3 D-68165 Mannheim(DE)**

(72) Erfinder: **Sinn, Ekkehard, Dr. Arvid-Harnack-Strasse 23 D-6900 Jena(DE)**
Erfinder: **Goernert, Peter, Prof. Dr. Judith-Auer-Strasse 11 D-6902 Jena(DE)**
Erfinder: **Schueppel, Walter, Dr. Binswangerstrasse 20 D-6902 Jena(DE)**
Erfinder: **Roesler, Michael, Dr. Alexanderstrasse 180 D-7000 Stuttgart 80(DE)**

(74) Vertreter: **Karau, Wolfgang, Dr. et al BASF Aktiengesellschaft, Patentabteilung ZDX - C 6 D-67056 Ludwigshafen (DE)**

(54) **Verfahren zur Herstellung von magnetischen Ferriten des M-Typs.**

(57) Die Erfindung betrifft ein Verfahren zur Herstellung von magnetischen Ferriten des M-Typs in Form hexagonaler Teilchen mit der allgemeinen Formel $MeFe_{12-2x}R^{II}_{x}R^{IV}_{x}O_{19}$, worin Me mindestens ein Metallatom aus der Gruppe Ba, Sr, Pb und Ca, $R^{II}$ mindestens ein zweiwertiges Metallion aus der Gruppe Co, Ni und Zn, $R^{IV}$ mindestens ein vierwertiges Metallion aus der Gruppe Ti, Sn, Ge und Zr und x eine Zahl zwischen größer 0,60 und 0,95 bedeutet, wobei bei der Temperung innerhalb der Aufheizperiode eine Heizrate von kleiner/gleich 1 K/s eingehalten wird.

EP 0 581 174 A1

Die Erfindung betrifft ein Verfahren zur Herstellung von magnetischen Ferriten des M-Typs in Form hexagonaler Teilchen mit der allgemeinen Formel $MeFe_{12-2x}R^{II}_xR^{IV}_xO_{19}$, worin Me mindestens ein Metallatom aus der Gruppe Ba, Sr, Pb und Ca, $R^{II}$ mindestens ein zweiwertiges Metallion aus der Gruppe Co, Ni und Zn, $R^{IV}$ mindestens ein vierwertiges Metallion aus der Gruppe Ti, Sn, Ge und Zr und x eine Zahl zwischen größer 0,60 und 0,95 bedeutet, nach dem sogenannten Glaskristallisationsverfahren.

Die magnetischen Ferrite der eingangs genannten Zusammensetzung sind bekannt. Ihre Herstellung erfolgt einerseits mittels keramischer Sinterverfahren der gemischten Ausgangsstoffe, gegebenenfalls unter Mitverwendung von wasserlöslichen Sinterhilfsstoffen. Daneben ist das Hydrothermalverfahren bekannt, bei dem die wäßrigen Lösungen der Ausgangsstoffe bei hoher Temperatur und Druck umgesetzt werden.

Des weiteren werden Ferrite vom angegebenen Typ auch nach dem sogenannten Glaskristallisationsverfahren hergestellt. Hierbei wird ein Gemisch von Ausgangsmaterialien, welches die den Ferrit bildenden Komponenten enthält, zusammen mit einem glasbildenden Material geschmolzen und anschließend durch schnelles Abkühlen in ein amorphes Glas überführt. Mittels eines darauffolgenden Temperschritts bildet sich aus der amorphen Phase mit den stofflichen Bestandteilen des Ferrits über Keimbildung und Wachstum die kristalline Phase der Ferrit-Teilchen, welche sich schließlich durch Auflösen der glasbildenden Komponenten isolieren lassen. Die Eigenschaften der isolierten Ferritpulver werden außer durch ihre stöchiometrische Zusammensetzung in wesentlichem Umfang von dem genannten Temperschritt beeinflußt, da insbesondere die resultierenden magnetischen Eigenschaften von der Partikelgeometrie mitbestimmt werden. Als geeigneter Temperaturbereich wird u.a. in der US-A 4 407 721 550 bis 900°C genannt. Etwas eingeschränkte Temperaturspannen von 700 bis 850°C sind in den US-A 4 569 775 und US-A 4 341 648 genannt. In letztgenannter Patentschrift sowie in der US-A 4 569 775 werden Temperzeiten von mehr als 2 Stunden und in der DE-A 30 41 960 von 2 bis 10 Stunden genannt.

Die nach dem Stand der Technik erhältlichen Ferritpulver weisen meist eine nicht genügend enge Teilchengrössenverteilung und ein zu hohes Durchmesser/Dicken-Verhältnis auf. Bei einer Verwendung solcher Materialien als magnetische Partikel für magnetische Aufzeichnungsträger können Probleme hinsichtlich der Packungsdichte auftreten, so daß trotz geeigneter Koerzitivfeldstärke die Sättigungsmagnetisierung und damit der Signalpegel der Aufzeichnung nicht die maximal möglichen Werte erreicht (T. Fujiwara, IEEE Trans. on Magnetics, MAG-23, 3125 (1985)).

Aufgabe der vorliegenden Erfindung war es daher, ein Verfahren zur Herstellung von magnetischen Ferriten des M-Typs bereitzustellen, die sich besonders für die Verwendung in magnetischen Aufzeichnungsträgern eignen und welche bei einer Sättigungsmagnetisierung von größer 50 $nTm^3/g$ sowie einer Koerzitivfeldstärke zwischen 24 und 160 kA/m eine sehr enge Verteilung der Partikeldurchmesser bei kleinem Durchmesser/Dicken-Verhältnis aufweisen.

Es wurde nun gefunden daß sich mit einem Verfahren zur Herstellung von magnetischen Ferriten des M-Typs in Form hexagonaler Teilchen mit der allgemeinen Formel $MeFe_{12-2x}R^{II}_xR^{IV}_xO_{19}$, worin Me mindestens ein Metallatom aus der Gruppe Ba, Sr, Pb und Ca, $R^{II}$ mindestens ein zweiwertiges Metallion aus der Gruppe Co, Ni und Zn, $R^{IV}$ mindestens ein vierwertiges Metallion aus der Gruppe Ti, Sn, Ge und Zr und x eine Zahl zwischen größer 0,60 und 0,95 bedeuten, durch Schmelzen eines Gemisches aus den Ausgangsmaterialien, welche die den Ferrit bildenden Komponenten enthalten, und einem glasbildenden Material, schnelles Abkühlen des geschmolzenen Gemisches unter Bildung eines amorphen Materials, Tempern des amorphen Materials unter Bildung von Ferrit-Teilchen und Isolieren der Ferrit-Teilchen durch Entfernen der übrigen Komponenten des getemperten Materials, die Aufgabe lösen läßt, wenn das amorphe Material bei einer Temperatur $T_2$ zwischen 630 und 820°C getempert wird, wobei die Aufheizperiode $t_1$ zwischen der Temperatur $T_1$ und $T_2$ mit einer Heizrate $dT/dt \leq 1$ K/s erfolgt.

In einer zweckmäßigen Ausgestaltung des erfindungsgemäßen Verfahrens entspricht die Temperatur $T_1$ der Glastransformationstemperatur $T_G$. Das Temperatur/Zeit-Diagramm ist in der Figur wiedergegeben.

Die Herstellung der Ferrite nach dem sogenannten Glaskristallationsverfahren ist bekannt. Hierbei werden die den hexagonalen Ferrit bildenden Kationen in Form ihrer Oxide oder Salze, z.B. Carbonate und Nitrate, mit einer glasbildenden Komponente, üblicherweise Boroxid oder Borsäure zusammen mit Bariumcarbonat, vermischt und durch Erhitzen bis auf 1400°C in eine einphasige Schmelzlösung überführt. Das Amorphisieren der Schmelze erfolgt beispielsweise mittels einer Zweiwalzenanlage mit 1 bis 2 m/s Umlaufgeschwindigkeit durch Kühlraten zwischen $10^3$ und $10^5$ K/s zu Chips oder Bandmaterial in Bruchstücken.

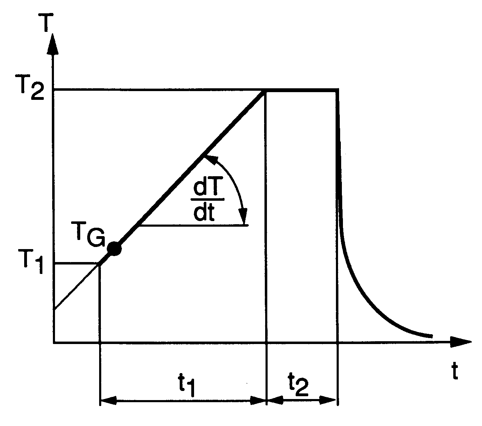

Die Bildung der kristallinen Phase des Ferrits in dieser amorphen Folie erfolgt durch Wärmebehandlung. Im Temperaturbereich zwischen 630°C und 820°C entstehen vornehmlich eindomänige, ferrimagnetische Kristallite, die im engeren Bereich zwischen 720°C und 790°C praktisch phasenreinen Ferrit vom M-Typ ergeben. Bevorzugt werden Temperaturen an der oberen Temperaturgrenze um 790°C, die mit steigender Temperzeit relativ hohe spezifische Sättigungsmagnetisierung aufweisen. Wird erfindungsgemäß

die Aufheizperiode $t_1$ von der Temperatur $T_1$, vorzugsweise von der Glastransformationstemperatur $T_G$ bis zur maximalen Tempertemperatur mit kritischen Heizraten dT/dt kleiner/gleich 1 K/s durchlaufen (Fig. 1), entstehen Ferritpulver mit einer geringen Kristallitgröße, enger Verteilungsbreite und einem kleinen Durchmesser/Dicken-Verhältnis. Bevorzugt sind Heizraten unter $2\times10^{-2}$ K/s. Die Haltezeit $t_2$ für die Temperung bei konstant gehaltener maximaler Temperatur beträgt zwischen 0 und 10 h, vorzugsweise 2 bis 6 h, um bei praktisch unveränderter Koerzitivfeldstärke die spezifische Sättigungsmagnetisierung zu steigern, wobei die morphologischen Kennwerte auch simultan anwachsen. Die Abkühlrate kann für natürliche Abkühlung des Tempergutes ohne Schaden hohe Werte annehmen.

Anschließend wird das zerkleinerte Tempergut üblicherweise in 20 %iger Essigsäure in Nähe des Siedepunktes für 6 bis 8 Stunden unter intensivem Rühren behandelt, um die ausgeschiedenen Ferritkristallite aus der umgebenden Matrix von Bariumborat herauszulösen. Dabei wird etwa die dreifache Säuremenge, gerechnet auf die stöchiometrische Umsetzung, eingesetzt. Danach folgt eine Separierung des Feinpulvers durch Filtern oder Zentrifugieren im Wechsel mit einem Waschprozeß, bis keine löslichen Verbindungen mehr nachweisbar sind.

Der auf der Grundlage des bekannten Glaskristallisationsverfahren mit Hilfe der erfindungsgemäßen Ausgestaltung erhaltene magnetische Ferrit des M-Typs in Form hexagonaler Teilchen weist eine Kristallitgröße (Plättchendurchmesser) zwischen 10 und 250 nm bei einem Durchmesser/Dicken-Verhältnis zwischen 2,5 und 4,5 auf. Besonders vorteilhaft läßt sich das Verfahren zur Herstellung von Ferrit-Teilchen mit einer Kristallitgröße von 45 bis 60 nm und einem Durchmesser/Dicken-Verhältnis zwischen 3 und 4 heranziehen. Die Größenverteilung der resultierenden Ferrit-Materialien beträgt weniger als 35 %. Während sich bei den erfindungsgemäß erhaltenen Ferrit-Materialien die Koerzitivfeldstärke durch die Substitution, d.h. den Anteil der $R^{II}$ und $R^{IV}$-Kationen, in weiten Grenzen einstellen läßt, ergeben sich bei der spezifischen Magnetisierung Werte von über 50 $nTm^3/g$.

Die gemäß dem erfindungsgemäßen Verfahren erhältlichen Ferrit-Teilchen eignen sich in besonders vorteilhafter Weise als magnetische Materialien bei der Herstellung von magnetischen Aufzeichnungsträgern.

Die Erfindung sei anhand der folgenden Beispiele und Vergleichsbeispiele näher erläutert.

Beispiel 1

Zur Herstellung eines Ferrits der Formel $BaFe_{10,4}Co_{0,8}Ti_{0,8}O_{19}$ werden die in der Tabelle 1 angegebenen Molmengen der einzelnen Komponenten vermischt und bei einer Temperatur zwischen 1330 und 1430°C in eine oxidische Schmelze umgewandelt. Innerhalb des Schmelzvolumens sind alle Komponenten homogen verteilt. Durch die anschließende Schnellabkühlung in einer Zweiwalzenanlage mit einer Abkühlrate zwischen $10^4$ bis $10^5$ K/s wird ein einheitliches Glas erzeugt, das als sprödes Glasband in irreguläre Bruchstücke zerfällt. Die nachfolgende Temperung erfolgt gemäß dem in der Figur 1 wiedergegebenen Diagramm mit den in der Tabelle 2 angegebenen Parametern. Die geometrischen und magnetischen Eigenschaften sind ebenfalls in der Tabelle 2 aufgeführt.

Beispiel 2

Es wird wie in Beispiel 1 beschrieben verfahren. Mit den in der Tabelle 1 angegebenen Molmengen der Ausgangsmaterialien wird ein Ferrit der Formel $BaFe_{10,35}Co_{0,825}Ti_{0,825}O_{19}$ erhalten. Die Verfahrensbedingungen und die Meßergebnisse sind in der Tabelle 2 aufgeführt.

Beispiel 3

Es wird wie in Beispiel 1 beschrieben verfahren. Mit den in der Tabelle 1 angegebenen Molmengen der Ausgangsmaterialien wird ein Ferrit der Formel $BaFe_{10,4}Co_{0,8}Ti_{0,45}Sn_{0,35}O_{19}$ erhalten. Die Verfahrensbedingungen und die Meßergebnisse sind in der Tabelle 2 aufgeführt.

Vergleichsversuch 1 und 2

Es werden wie in Beispiel 1 beschrieben Ferrite der in den Beispielen 1 und 3 angegebenen Zusammensetzung, jedoch mit den in der Tabelle 2 aufgelisteten Temperbedingungen hergestellt. Die Meßergebnisse sind ebenfalls in der Tabelle 2 aufgeführt.

Tabelle 1

| Molare Zusammensetzung | Bsp.1 | Bsp.2 | Bsp.3 |
|---|---|---|---|
| BaO | 0,400 | 0,400 | 0,400 |
| $B_2O_3$ | 0,330 | 0,3300 | 0,3200 |
| $Fe_2O_3$ | 0,234 | 0,2329 | 0,2340 |
| CoO | 0,036 | 0,0371 | 0,0360 |
| $TiO_2$ | 0,036 | 0,0371 | 0,0203 |
| $SnO_2$ | - | - | 0,0158 |
| $\Sigma$ | 1,036 | 1,0371 | 1,0361 |

Tabelle 2

| | Bsp.1 | Bsp.2 | Bsp.3 | Vergl. vers.1 | Vergl. vers.2 |
|---|---|---|---|---|---|
| **Temperung** | | | | | |
| $t_1$ [h] | 6 | 6 | 6 | 0 | 0 |
| $t_2$ [h] | 2 | 2 | 2 | 8 | 2 |
| $T_1$ [°C] | 475 | 475 | 475 | 20 | 20 |
| $T_2$ [°C] | 790 | 790 | 785 | 780 | 780 |
| **Partikelanalyse** | | | | | |
| Durchmesser D [nm] | 45,4 ± 15,5 | 53,3 ± 17,5 | 46,1 ± 15,1 | 73,4 ± 30,7 | 76,2 ± 32,2 |
| Durchmesser-Dicken-Verhältnis D/d | 3,3 ± 0,9 | 3,7 ± 1,0 | 3,9 ± 1,1 | 5,1 ± 1,8 | 5,4 ± 2,1 |
| spezifische Oberfläche S [$m^2$/g] | | | | | |
| nach TEM | 39,1 | 36,0 | 34,0 | 30,4 | 31,1 |
| nach BET | 30,0 ± 1,0 | 34,5 ± 1,5 | 35,0 ± 1,0 | 28,0 ± 1,5 | 27,8 ± 1,7 |
| **magnetische Eigenschaften** | | | | | |
| Curie-Temperatur $T_c$ [°C] | 358 | 351 | 337 | 360 | 337 |
| spezifische Magnetisierung $\tau$ [$nTm^3$/g] | 55,0 | 54,8 | 54,2 | 53,7 | 52,9 |
| Remanenzverhältnis $M_r$/$M_s$ | 0,47 | 0,47 | 0,45 | 0,46 | 0,46 |
| Koerzitivfeldstärke $H_c$ [kA/m] | 81,2 | 74,0 | 60,8 | 76,6 | 56,1 |

**Patentansprüche**

1. Verfahren zur Herstellung von magnetischen Ferriten des M-Typs in Form hexagonaler Teilchen mit der allgemeinen Formel $MeFe_{12-2x}R^{II}_xR^{IV}_xO_{19}$, worin Me mindestens ein Metallatom aus der Gruppe Ba, Sr, Pb und Ca, $R^{II}$ mindestens ein zweiwertiges Metallion aus der Gruppe Co, Ni und Zn, $R^{IV}$ mindestens ein vierwertiges Metallion aus der Gruppe Ti, Sn, Ge und Zr und x eine Zahl zwischen größer 0,60 und 0,95 bedeutet durch Schmelzen eines Gemisches aus den Ausgangsmaterialien, welche die den Ferrit bildenden Komponenten enthalten, und einem glasbildenden Material, schnelles Abkühlen des geschmolzenen Gemisches unter Bildung eines amorphen Materials, Tempern des amorphen Materials unter Bildung der Ferrit-Teilchen und Isolieren der Ferrit-Teilchen durch Entfernen der übrigen Komponenten des getemperten Materials, dadurch gekennzeichnet, daß das amorphe Material bei einer Temperatur $T_2$ zwischen 630 und 820 °C getempert wird, wobei die Aufheizperiode $t_1$ zwischen der Temperatur $T_1$ und $T_2$ mit einer Heizrate $dT/dt \leq 1$ K/s erfolgt.

**2.** Verfahren gemäß Anspruch 1, dadurch gekennzeichnet, daß die Temperatur $T_1$ die Glastransformationstemperatur $T_G$ ist.

**Europäisches Patentamt**

**EUROPÄISCHER RECHERCHENBERICHT**

Nummer der Anmeldung

EP 93111635.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.⁵) |
|---|---|---|---|
| X | DD - A - 300 285 (PHYSIKALISCH-TECHNISCHES INSTITUT HELMHÓL) * Anspruch 1; Seite 2, Zeilen 10-25 * | 1 | C 01 G 49/02 C 04 B 35/26 H 01 F 1/11 |
| D,Y | US - A - 4 341 648 (KUBO) * Ansprüche 1,12 * | 1 | |
| Y | CHEMICAL ABSTRACTS, Band 94, Nr. 16, 20. April 1981, Columbus, Ohio, USA LUBITZ, P. et al. "Magnetic properties of substituted M--type hexagonal ferrites" Seite 673, Zusammenfassung--Nr. 131 354g & J. Magn. Magn. Mater, 1980, 15-18(3), 1459-60 | 1 | |
| A | CHEMICAL ABSTRACTS, Band 114, Nr. 4, 28. Jänner 1991, Columbus, Ohio, USA YAMAMOTO, HIROSHI et al. "Magnetic properties of M--type hexagonal ferrite magnets of the isotropic strontium-lanthanum-neodymium -praseodymium system" Seite 725, Zusammenfassung--Nr. 34 578g & Meiji Daigaku Kagaku Gijutsu Kenkyusho Kiyo, 1989, 28(2), 15-25 | 1 | **RECHERCHIERTE SACHGEBIETE (Int. Cl.⁵)** C 01 G 49/00 C 04 B 35/00 H 01 F 1/00 |
| A | CHEMICAL ABSTRACTS, Band 111, Nr. 18, 30. Oktober 1989, Columbus, Ohio, USA KALOGIROU, O. et al., | 1 | |

Der vorliegende Recherchenbericht wurde für alle Patentansprüche erstellt.

| Recherchenort WIEN | Abschlußdatum der Recherche 03-09-1993 | Prüfer HAMMER |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁴) |
|---|---|---|---|
| | "Synthesis and magnetic properties of platalet shape spinel and M-type hexagonal ferrites prepared from beta"-alumina-like ferrites by ion exchange" Seite 855, Zusammenfassung-Nr. 166 045d & J. Phys. Colloq., 1988, (C8, Proc. Int. Congr. Magn., 1988, Pt. 2), C8-937/C8-938 | | |
| A | CHEMICAL ABSTRACTS, Band 115, Nr. 18, 4. November 1991, Columbus, Ohio, USA MARUYAMA, YASUMASA "Hexagonal ferrite magnetic powders for recording medium" Seite 935, Zusammenfassungs-Nr. 196 602h & Jpn. Kokai Tokkyo Koho JP 03 79,001 (91 79,001) | 1 | |
| A | CHEMICAL ABSTRACTS, Band 115, Nr. 26, 30. Dezember 1991, Columbus, Ohio, USA KURISU, TOSHIHARU et al. "Manufacture of ferrite powders for magnetic recording media" Seite 914, Zusammenfassung-Nr. 293 337h & Jpn. Kokai Tokkyo Koho JP 02,260,610 (90,260,610) | 1 | |

RECHERCHIERTE SACHGEBIETE (Int. Cl.⁴)

Der vorliegende Recherchenbericht wurde für alle Patentansprüche erstellt.

| Recherchenort | Abschlußdatum der Recherche | Prüfer |
|---|---|---|
| WIEN | 03-09-1993 | HAMMER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82